# EUROPEAN PATENT APPLICATION

(11) **EP 3 730 661 A1**
(43) Date of publication of application: **28.10.2020**
(21) Application number: 17935381.8
(22) Date of filing: 22.12.2017
(51) Int. Cl.: C22C 49/06, C22C 1/04, B22F 3/12, B82Y 30/00, B82Y 40/00

(54) **COMPOSITE MATERIAL BASED ON QUASICRYSTAL SYSTEM OF AL-CU-FE AND METHOD OF PRODUCING SAME**

(71) Applicant: STATE ATOMIC ENERGY CORPORATION "ROSATOM" ON BEHALF OF THE RUSSIAN FEDERATION, Moscow, 119017 (RU); JOINT STOCK COMPANY "STATE RESEARCH CENTER OF RUSSIAN FEDERATION TROITSK INSTITUTE FOR INNOVATION AND FUSION RESEARCH", Moscow, 108840 (RU)
(72) Inventor: EKIMOV, Evgenij Alekseevich, Moscow, 108840 (RU); IVANOV, Aleksandr Sergeevich, Moscow, 125080 (RU); PAL, Aleksandr Fridrihovich, Moscow, 119192 (RU); RYABINKIN, Aleksej Nikolaevich, Moscow, 111020 (RU); SEROV, Aleksandr Olegovich, Moscow, 121059 (RU); STAROSTIN, Andrej Nikonovich, Moscow, 123098 (RU)
(74) Representative: Friese Goeden Patentanwälte PartGmbB
(86) International application number: PCT/RU2017/000960
(87) International publication number: WO 2019/125199

(57) **Abstract**

The invention relates to powder techniques for producing solid three-dimensional materials. The technical result of the invention consists in improving the characteristics of the three-dimensional materials produced and creating additional possibilities for new technological applications by improving the properties of said materials. The technical result is achieved with the aid of a composite material based on a quasicrystal powder of an Al-Cu-Fe system with a nickel binder, said composite material containing a reinforcing nickel lattice, and is achieved by the fact that a nickel coating is applied to quasicrystal powder particles of an Al-Cu-Fe system (to this end, the quasicrystal powder is advantageously treated in plasma, as a result of which a thin (10-20 nm) nickel coating forms on the surface of the powder particles). The treated powder, which is a dispersed composite material, is then pressed at room temperature under quasi-hydrostatic conditions at a pressure of more than 1.5 GPa. Using the method developed, three-dimensional fully dense composite quasicrystal materials were produced with high mechanical properties, a decreased coefficient of friction and increased resistance to mechanical wear.

## Description

### Field of Application

The invention is concerned with the production of three-dimensional, fully dense composite materials on the basis of quasi-crystals. The invention relates to the powder technology of the production of solid three-dimensional materials having a low friction coefficient, increased resistance to mechanical wear, increased corrosion resistance and reduced sensitivity to radiation damage. Such materials can be widely used in mechanical engineering, in the development of space apparatus operating in high vacuum, in chemical and electronic industries, in atomic power engineering for increasing the service life and reliability in operation of parts of machines and mechanisms, and also for imparting new functional capabilities to articles from traditional, relatively inexpensive materials.

### State of the problem and existing prior art

The distinctive feature of quasi-crystals is an unusual combination of properties: low coefficient of friction, high wear resistance, high corrosion resistance as well as low stickiness [1-3]. The physico-mechanical properties of quasi-crystals of Al-Cu-Fe, as well as the existing effective method of their production in the form of powders [4] make it necessary to develop a method of obtaining three-dimensional materials from these powders. However, the formation of articles from quasi-crystals using powder technology encounters considerable difficulties: a low stickiness of quasi-crystals, in particular, leads to increased wear of friction pairs and the appearance of chipping and cracks in finished products. In this connection, various methods are being developed for forming composite materials adapted to unique properties of quasi-crystalline compounds. In [4] there were obtained three-dimensional samples representing aluminum and polymer matrices with inclusions of particles of a quasi-crystal of Al-Cu-Fe. The disadvantage of this method is the low density of the obtained materials [5]. Existing methods for making composite materials are based on the process of mixing the base material and the binder component [6]. In this case both components are in a dispersed state. However, an ideal uniformity of incorporation of small amounts of binder is not achieved due to the physical constraints caused by the stochastic nature of the mixing process. On the other hand, methods are known for the production of disperse composite materials (DCM)-powders consisting of small particles coated with shells, which make it possible to apply a certain amount of binder component to the base particles and thereby ensure a uniform introduction of the binder component.

We have developed a method of producing disperse composite materials in a dust plasma. The method is based on using properties of plasma-dust traps making it possible to keep, for a long period of time, in plasma levitation structures from dust particles. A metal coating is applied to these particles by means of the flow of atoms created by a magnetron spraying system [7-11]. The method makes it possible to produce small particles of different materials (average size in the range of 1-10 µm) with coatings of a thickness of 10-20 nm. The developed method of applying coatings to the surface of small particles in plasma has a number of advantages, such as the absence of principal limitations of the chemical composition of the powder particles and the coating, the possibility to obtain chemically pure nano-coatings, a high adhesion strength, continuity and controllability of the thickness of the deposited layer. Depending on the discharge conditions, coatings of different morphology can be obtained.

When the binder component is added to the powder in the form of such a coating, the level of homogeneity of the distribution of the components is limited only by the average particle size. As a result, the characteristics of the dense materials obtained on the basis of such composite powders are improved. It becomes possible to create a new type of massive materials having the anti-sintering and anti-frictional properties of quasi-crystalline compounds.

It is known a method [12] for improving the mechanical properties of quasi-crystalline materials while preserving the low values of the coefficient of friction. A solution of this problem it has been tried to find by providing a composite material based on quasi-crystal powders whose particles are coated with nickel nanocoverings in a plasma-dust trap. Samples pressed from such powders after annealing in hydrogen, in some cases showed rather low values of the coefficient of friction (about 0,15) and practically no wear in the process of tribological tests [12]. The presence of the reinforcing nickel network within the sintered sample should result in a significant increase in toughness. However, it was not possible to obtain a stable, well-reproducible result, since pressing at relatively low pressure (∼ 1-1.5 GPa) was used. In this case, cleavage planes in samples were observed and, in some cases, they developed their porous structure. In addition, sintering of the pressed samples in hydrogen at a temperature of 1000K resulted in the interaction of the quasi-crystalline core with the nickel-coating to form β-phases.

This method is, in its technical nature, the closest to the present invention. A significant limitation of this technique is the poor reproducibility of the results associated with the formation of defects, the presence of pores in the structure of the material and the marked increase in the β-phase content.

There is known a method of producing a three-dimensional dense material from a powder of a quasi-crystal Al-Cu-Fe without using binders and activators by cold pressing at pressures of 8-9 GPa, followed by annealing at atmospheric pressure [13]. The method makes it possible to obtain samples with an average friction coefficient of 0.15 and a density close to theoretical. However, it should be noted that pure quasi-crystalline materials are very brittle and their toughness is at a relatively low level, which limits their practical application. Therefore, pressing at high pressures does not provide an optimal combination of tribological and strength properties of a material. In addition, the shortcomings of the sintering of the quasi-crystal Al-Cu-Fe at high pressures, which causes the absence of practical results, are related to the appearance of specific defects in the structure [13-15].

Thus, the limitations of this method are the presence of defects in the pressed samples and a low impact strength of the products obtained, which is characteristic of the pure quasi-crystal s.

### Disclosure of the invention

It is an object of the invention to provide solid three-dimensional, fully dense materials with low coefficient of friction and increased strength and resistance to mechanical wear. The technical result of the invention consists in (a) the improvement of characteristics of the obtained three-dimensional materials and (b) the creation of additional possibilities for new technological applications due to the improvement of their properties.

The technical result is realized by providing a composite material on the basis of a quasi-crystalline powder of the Al-Cu-Fe system with a nickel binder, containing a reinforcing nickel lattice, and is achieved in that a nickel coating is deposited on the particles of the powder of the quasi-crystal of the Al-Cu-Fe system (for this purpose the powder of the quasi-crystal is predominantly is treated in plasma, as a result of which a thin (10-20 nm) nickel coating is formed on the surface of the powder particles). Then, the treated powder, which is a disperse composite material, is pressed at room temperature under quasi-hydrostatic conditions at a pressure of more than 1.5 GPa.

Prior to compression at high pressure, the powder may be heated in hydrogen at a temperature of less than 773K (or more preferably less than 770K) to reduce the oxide film on the surface of the nickel coating.

Powders can be compacted in advance under a pressure of not more than 0.7 GPa.

Further, the nickel-coated powder is pressed at a pressure of more than 1.5 GPa, and the pressed powder is annealed preferably under a pressure of less than 100 MPa in a reducing or inert atmosphere. The high density of samples obtained as a result of pressing at the specified pressures, and in particular embodiments at pressures of 8-9 GPa, makes it possible to eliminate the formation of pores and chips, and the nickel binder provides increased resistance to mechanical wear of the article. Samples obtained by cold pressing at pressures of 8-9 GPa are then annealed at normal pressure in a reducing or inert atmosphere or in vacuum to form a reinforcing nickel network within the sintered sample. The annealing temperature at normal pressure should not exceed 850K.

The high tribological and strength properties of the dense samples are achieved by applying high pressures to produce full-density compacts and forming an uniform reinforcing nickel network within the sintered sample so thin that the relative nickel content in the composite does not exceed 3 wt. %.

### Example of use of the invention

Production of three-dimensional fully dense composite materials with reduced coefficient of friction and increased resistance to mechanical wear from powders of dispersed composite materials on the basis of a quasi-crystal Al-Cu-Fe, the particles of which are coated with nickel nanocoverings, with application of high pressures of 8-9 GPa.

To produce a nickel coating on the quasi-crystalline powder particles, the powder was treated in a dust plasma using a magnetron sputter system. Powder of quasi-crystal Al-Cu-Fe with a particle size in the range of 0.5-20 µm is used. In order to purify the powder from adsorbed gaseous impurities, in the preparation stage of the experiment for 15 minutes the reactor with the powder contained therein was heated to 200°C with simultaneous vacuum evacuation. The nickel coatings were sprayed onto the particles in argon atmosphere of the quality HP at a pressure of 0.4 Pa at a rate of 20 sccm. The deposition time was 40 minutes. At the end of the process, the powder consisting of coated particles was removed from the reactor under atmospheric conditions.

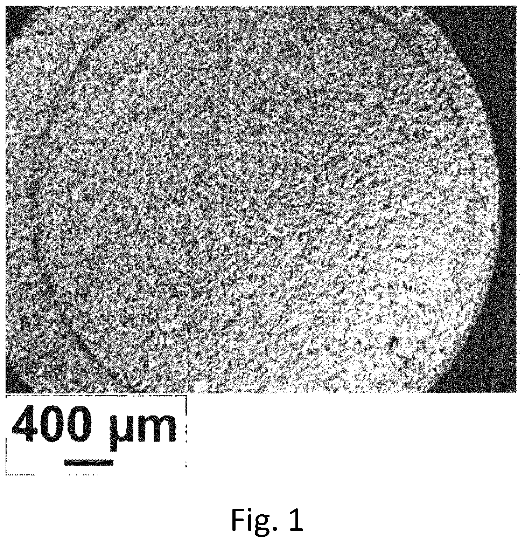

The plasma-treated powders were compressed in a high-pressure chamber at a pressure of 8 GPa at room temperature in a graphite container. Then, the obtained samples were annealed in hydrogen at atmospheric pressure. Quartz furnace was used for annealing. The annealing temperature was 823K, the annealing time was 40 minutes. After annealing, the samples were cooled in hydrogen together with the furnace to room temperature. Cylindrical composite samples with a height of 3 mm and a diameter of about 4 mm (Fig. 1) were obtained.

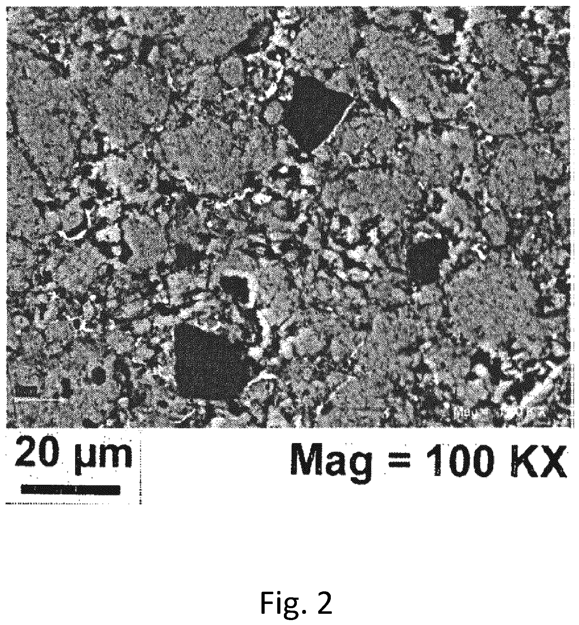

The microstructure of the samples was examined by scanning electron microscopy (SEM). In Fig. 2 is an shown an SEM image of the polished surface of the sample.

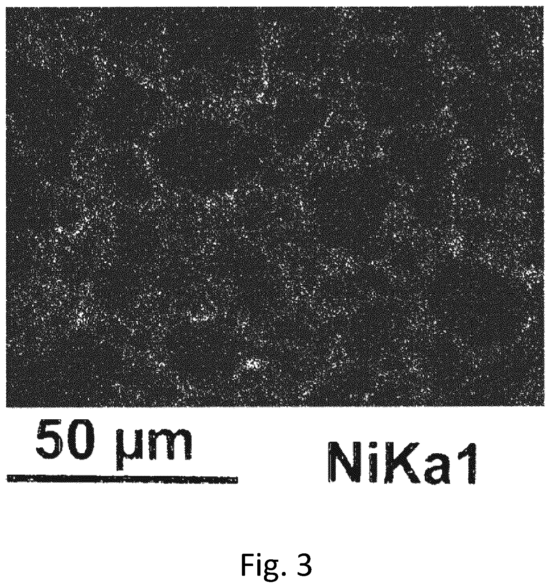

In Fig. 3. in a light tone, the distribution of nickel in the same area of the surface obtained in the mapping mode is highlighted. The signal from the characteristic radiation of the nickel is practically absent in polished sections of grains, but in all interlayers between grains it is detected. Thus, it can be seen that the nickel is distributed evenly over the surface of the particles.

The density of the samples was determined by the pycnometric method. The measured density of the samples was in the range 4.63-4.68 g/cm³, which corresponds to the maximum values of the density of quasi-crystals known from the literature.

An investigation of the elastic characteristics was carried out by a pulsed ultrasonic method at a frequency of 10 MHz. The mechanical properties of the samples were studied by the method of measuring indentation on a NanoHardness Tester with a load increase up to 30 mN, in nine measurements. The hardness of the samples ranges from 7 to 10 Gpa, which is characteristic of the block quasi-crystal, the young's Modulus is in the range of 130 to 150 GPa.

According to the above data, the obtained samples have a coefficient of friction over steel in the range of 0.05-0.15 and increased wear resistance.

Thus, by means of the developed method, full-density composite quasi-crystalline materials with high hardness, high modulus of elasticity, reduced coefficient of friction and increased resistance to mechanical wear are obtained.

### Sources of information

1. Zbigniew M. Stadnik (Ed). Physical Properties of Quasicrystals. Springer Series in SOLID-STATE SCIENCES
2. J.-M Dubois, S.S. Kang and Y.Massiani. Application of quasi-crystalline alloys to surface coating of soft metals. Non-Crystalline Solids, 153 & 154, 443-4445, 1993.
3. J.-M Dubois, S.S. Kang and A.Perrot. Materials Science and Engineering, A 179/A180, 122-126, 1994.
4. Kaloshkin, S.D., Tcherdynsev, V.V., and Danilov, V.D., Preparation of Al-Cu-Fe quasicrystalline powdered alloys and related materials by mechanical activation, Crystallogr. Rep., 2007, vol. 52, no. 6, p. 953
5. Petrozhik, M.I. and Levashov, E.A., Modern methods of investigating functional surfaces of advanced materials by mechanical contact testing, Crystallogr. Rep., 2007, vol. 52, no. 6, p. 966
6. Patent: Preparation process for quasi-crystal particles reinforced magnesium base composite material CN 1306051 C
7. V.E. Fortov, H. Hora, A.S. Ivanov et al. Methode und Anordnung zur Herstellung dispergierter zusammengesetzter Materialien. Offenlegungsschrift DE 19832908 A1, 1998.
8. H. Kersten, P. Schmetz, G.M.W. Kroesen, Surface Modification of Powder Particles by Plasma Deposition. Surf. Coat. Technol. 108-109, 507, (1998)
9. A.S. Ivanov, V.S. Mitin, A.F. Pal, A.N. Ryabinkin, A.O. Serov, A.N. Starostin, Disperse composite materials with nanocoating (Ru.), Nanotechnika, 2008, No. 14, p. 21-25
10. A.S. Ivanov, V.S. Mitin, A.F. Pal, A.N. Ryabinkin, A.O. Serov, E.A. Skryleva, A.N. Starostin, V.E. Fortov, Yu.M. Shchulga, Preparation of disperse composite materials in a dust plasma (Ru.), Doklady Akademii Nauk, 395, 3, 2004, 335-338.
11. A.S. Ivanov, A.F. Pal, A.N. Ryabinkin, A.O. Serov, E.A. Ekimov, A.V. Smirnov, A.N. Starostin., Application of dust plasma for the preparation of dispersed composite materials (Ru.), Ros. Khim., J. (J. Ros. Khim. Ob-va. im. D.I. Mendeleeva), 2013, vol. LVII, No. 3, P. 70-82.
12. Ivanov, A.S., Kruglov, V.S., Pal, A.F., et al., Synthesis and characterization of macrocomposites based on nickel coated quasicrystalline Al-Cu-Fe powder, Tech. Phys. Lett., 2011, vol. 37, no. 10, p. 917
13. E.A. Ekimov, V.P. Sirotinkin, M.I. Petrzhik, E.L. Gromnitskaya, Sintering, structure, and physical properties of Al-Cu-Fe quasicrystals compacted at high pressure, Inorganic Materials, vol. 50, issue 1, pp. 52-57
14. X. Jiang, Z. Chen, Y. Wang, D. Zhou, " The crystalline to quasicrystalline phase transformation in rapidly solidified Al65Cu20Fe15 powder at high pressure and high temperature " Scripta Metall. Mater., vol. 27, 1401-1403 (1992)
15. Yu.V. Mil'man, N.A. Efremov, S.V. Ul'shin, A.I. Bykov, O.D. Neikov, A.V. Samelyuk, "Mechanical properties Of Al-Cu-Fe alloys sintered at high pressure". Powder Metallurgy and Metal Ceramics, vol. 49, 280-288 (2010)

## Claims

1. Composite material based on quasi-crystalline powder of the Al-Cu-Fe system with a nickel binder, **characterized in that** it contains a reinforcing nickel lattice.

2. Method of preparing the composite material according to claim 1, comprising the steps of applying a nickel coating on particles of a powder of the quasi-crystal Al-Cu-Fe system, pressing the powder with a nickel coating at a pressure greater than 1. 5 GPa and annealing of the pressed powder at a pressure below 100 MPa under a reducing or inert atmosphere or under vacuum at a temperature not higher than 850K.

3. The method according to claim 2, **characterized in that** the pressing of the powder is carried out at a pressure higher than 8 GPa.

4. The method according to claim 2, **characterized in that** the pressing of the powder is carried out at a pressure of less than 9 GPa.

5. The method according to claim 2, **characterized in that** prior to pressing, the powder of the quasi-crystal with a nickel coating is annealed in a reducing atmosphere at a temperature of less than 770K.

6. The method according to claim 2, **characterized in that** prior to pressing at high pressure, the powder of quasi-crystal with nickel coating is compacted under a pressure of not more than 0.7 GPa.
